# EUROPEAN PATENT SPECIFICATION

(11) **EP 1 163 847 B1**
(45) Date of publication and mention of the grant of the patent: **23.08.2006**
(21) Application number: 01203074.8
(22) Date of filing: 09.04.1997
(51) Int. Cl.: A01M 7/00

(54) **A field sprayer**
Landwirtschaftliche Feldspritze
Pulvérisateur agricole

(30) Priority: 10.04.1996 DK 40696
(43) Date of publication of application: 19.12.2001
(62) Divisional of application: 97917282.2
(73) Proprietor: HARDI INTERNATIONAL A/S, 2630 Taastrup (DK)
(72) Inventor: Nejsum, Lars, 2950 Vedbaek (DK)
(74) Representative: Sundien, Thomas

(56) References cited:
- WO-A-95/16347
- US-A- 5 098 018

## Description

The present invention is directed to an improvement of air-assisted field sprayers having a boom construction as defined in the introductory part of claim 1.

Field sprayers of that type are generally known in the art, and carry an air blower mounted on the central part of the boom construction. The air blower is connected with an air hose that extends continuously from one end of the boom construction to the other, and provides a flow of pressurized air that leaves air outlets formed on the underside of the air hose, see international patent application WO-95/16347 or Australian patent application No. 14546/83.

However, problems of the efficiency of the known field sprayers arise when moving across the field, when up and down pivotal movements of the boom sections with respect to the central portion of the boom construction may cause the air hose to collapse, thereby blocking the passage of air. Attempts to solve these problems have so far been directed towards developing means that seek to provide a high degree of control of the pivotal movements of the boom sections. None of the solutions provided so far have, however, been satisfactory from a cost perspective.

The above problems are remedied through the present invention as defined in claim 1. The provision of two structurally isolated or separate air hoses that are carried by a respective boom section and which are fed by a corresponding air blower mounted on each boom section prevents the problem of blockage of the air passage, while still providing the advantages of conventional air assisted sprayers that make use of an air flow for directing a spraying agent towards the crop. Thus, through the invention, the farmer is provided with an improved flexibility when planning his spraying operation.

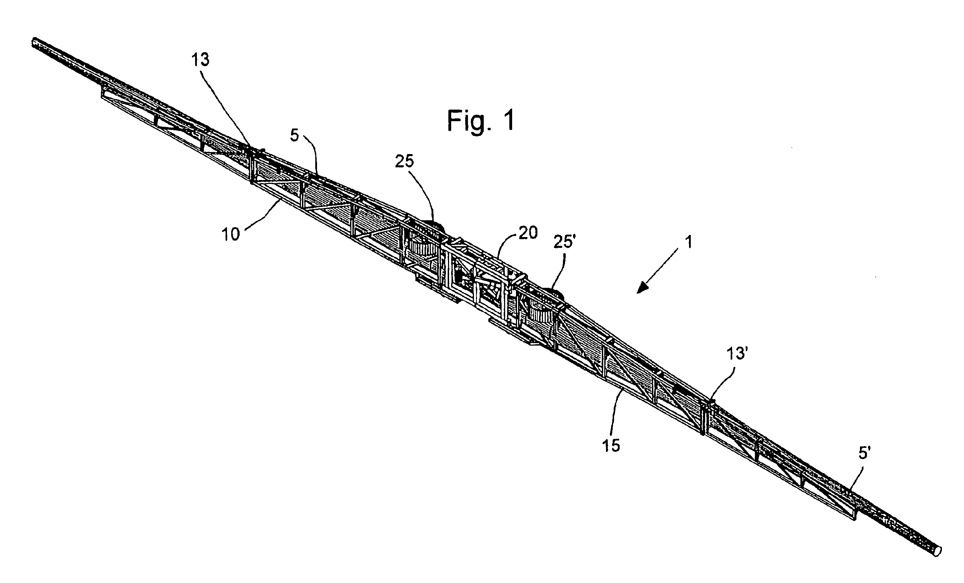

The invention will now be described in further detail with reference to the drawings, wherein
Figure 1 is a perspective view of a boom construction with two boom sections, seen in the direction of advancement,
Figure 2 is a perspective view of a boom section, and

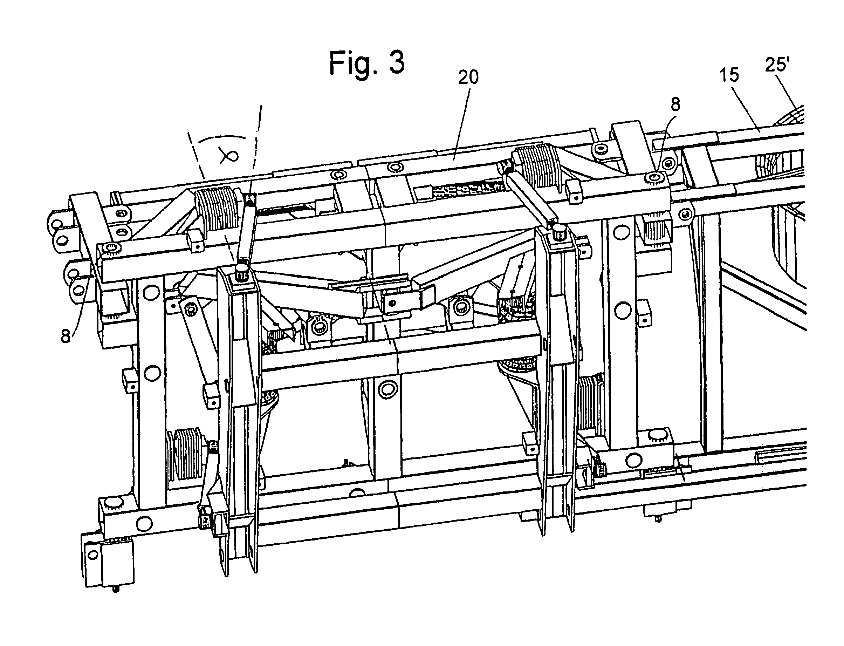

Figure 3 is a perspective view of the central portion of the boom construction.

The boom construction 1 has a central part 20 for mounting the boom construction on a permanent tool bar portion on a tractor or trailer (not shown) provided with the elements necessary for operating a field sprayer, such as described in e.g. international patent application no. WO-95/16347 or Australian patent application no. 14546/83, including pumps and one or more receptacles for spraying agent or water.

The boom construction 1 includes two boom sections 10, 15, each having a length of e.g. 12 metres and comprising subsections. The subsections are interconnected at joints 13, 13' and the boom sections 10, 15 are connected with the central part 20 at joints 8, whereby the boom sections 10, 15 may be collapsed. The boom construction 1 carries two elongated flexible air hoses 5, 5' and hoses and nozzles for ejecting spraying liquid.

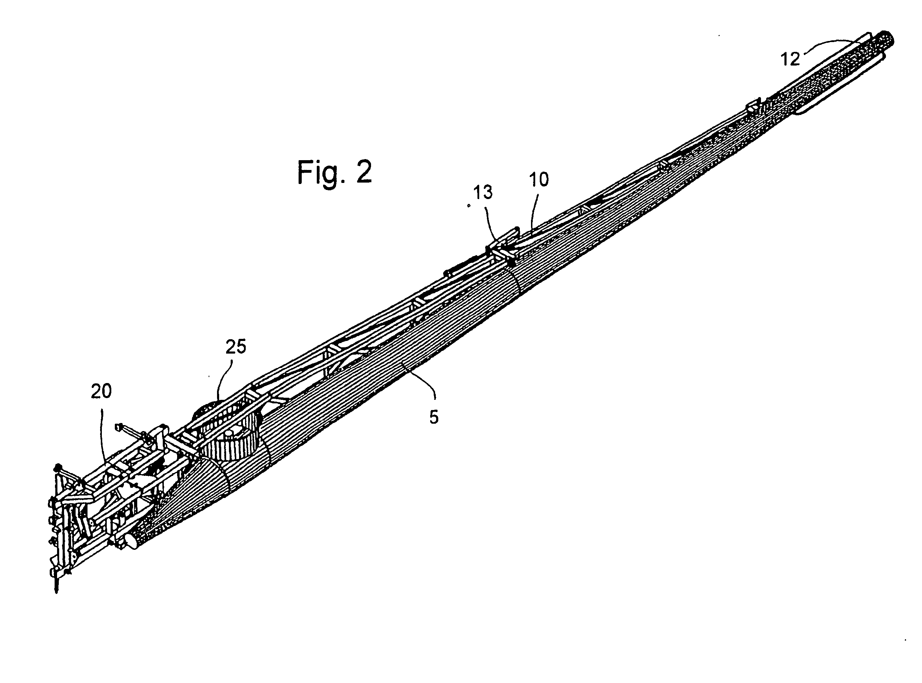

Fig. 2 is a more detailed view of one of the boom sections 10 and the central portion 20. The boom section 10 carries a separate air blower 25. The flexible air hose 5 is cut off at the ends and extends from the central portion 20 to the extremity 12 of the boom section 10. The air blower 25 is mounted near the end of the boom section 10 where it is embedded on the central portion 20, but of course it may be located anywhere along the boom section to provide the desired flow conditions inside the air hose. On its underside, the air hose 5 is provided with air outlets which may e.g. be of the type shown in the above-mentioned Australian or international patent applications.

The principle shown in Figure 2 where each of the two boom sections 10, 15 is provided with an air hose and an air blower 25 arranged in the vicinity of the central portion 20, may advantageously be applied to field sprayers where it is necessary to be able to oscillate one boom section upwards or downwards in the vertical plane by means of actuators, irrespective of the position of the other boom section. In this situation the boom sections will be connected with the central portion 20 via swivel joints that allow pivoting about a horizontal axis. The advantage of using two separate air hoses 5 with an associated air blower 25 is that it enables said pivotal movement of each boom section 10, 15. This pivotal movement cannot be performed when the field sprayer has only one air blower, cf. e.g. Australian patent application No. 14546/83, since the pivotal movement entails that the air hose collapses in its pivoting point, thereby blocking the passage of air.

## Claims

1. A boom construction (1) including i) a central portion (20) for mounting the boom construction (1) on a trailer or a tractor, ii) a boom section (10, 15) pivotally connected with each side of said central portion (20) and adapted to extend from said side, iii) hoses and nozzles for a spraying liquid, iv) elongated air hose means having air outlets arranged along its underside, and v) means for generating and supplying air to said air hose means,
**characterised in that** the elongated air hose means includes a first elongated flexible air hose (5) that extends from the area of the central portion (20) to the opposite extremity (12) of one of said boom sections (10), and which is separate from a second elongated flexible air hose (5') extending along the other boom section (15), and **in that** each boom section (10, 15) carries a single air blower (25, 25') for providing desired flow conditions within the air hose (5, 5') associated with that boom section (10, 15).

2. A boom construction according to claim 1, **characterised in that** the boom sections (10, 15) comprise subsections connected at joints (13, 13'), said boom sections being collapsible.

3. A boom construction according to any of the preceding claims, **characterised in that** the air blower (5) is arranged in the vicinity of the central portion (20) of the boom construction (1).

4. A boom construction according to any of the preceding claims, **characterised in that** the air hose (5) tapers towards the end thereof remote from the air blower (25) supplying air thereto.

5. A boom construction according to the preceding claim, **characterised in that** the air hose (5) includes two subsections tapering towards a respective end (12) of the air hose (5).

## Patentansprüche

1. Auslegeraufbau (1) mit
i) einem mittleren Abschnitt (20) zum Montieren des Auslegeraufbaus (1) an einen Anhänger oder an eine Zugmaschine,
ii) einem Auslegerabschnitt (10, 15), der drehbar mit jeder Seite des mittleren Abschnitts (20) verbunden ist und so angepasst ist, dass er sich von dieser Seite aus erstreckt,
iii) Schläuchen und Düsen für eine zu sprühende Flüssigkeit,
iv) einer länglichen Luftschlaucheinrichtung, die Luftauslässe entlang ihrer Unterseite besitzt, und
v) einer Einrichtung zum Erzeugen und zum Zuführen von Luft in die Luftschlaucheinrichtung,
**dadurch gekennzeichnet, dass**
die längliche Luftschlaucheinrichtung einen ersten länglichen flexiblen Luftschlauch (5) besitzt, der sich von dem Bereich des mittleren Abschnitts (20) bis zu dem entgegengesetzten Äußersten (12) von einem der Auslegerabschnitte (10) erstreckt und der von einem zweiten länglichen flexiblen Luftschlauch (5') separat ist, der sich entlang des anderen Auslegerabschnitts (15) erstreckt, und dass jeder Auslegerabschnitt (10, 15) ein einzelnes Luftgebläse (25, 25') zum Vorsehen von gewünschten Strömungsbedingungen in dem zu dem Auslegerabschnitt (10, 15) gehörenden Luftschlauch (5, 5') trägt.

2. Auslegeraufbau gemäß Anspruch 1,
**dadurch gekennzeichnet, dass**
die Auslegerabschnitte (10, 15) Teilabschnitte besitzen, die an Verbindungen (13, 13') verbunden sind, wobei die Auslegerabschnitte zusammenlegbar sind.

3. Auslegeraufbau gemäß einem der vorstehenden Ansprüche,
**dadurch gekennzeichnet, dass**
das Luftgebläse (5) in der Nähe des mittleren Abschnitts (20) des Auslegeraufbaus (1) angeordnet ist.

4. Auslegeraufbau gemäß einem der vorstehenden Ansprüche,
**dadurch gekennzeichnet, dass**
sich der Luftschlauch (5) zu seinem Ende hin verjüngt, das von dem Luftgebläse (25) entfernt gelegen ist, das diesem Luft zuführt.

5. Auslegeraufbau gemäß dem vorstehenden Anspruch,
**dadurch gekennzeichnet, dass**
der Luftschlauch (5) zwei Teilabschnitte besitzt, die sich zu einem entsprechenden Ende (12) des Luftschlauchs (5) hin verjüngen.

## Revendications

1. Construction en forme de flèche (1), incluant : i) une partie centrale (20) pour monter la construction en flèche (1) sur un tracteur ou une remorque, ii) un tronçon de flèche (10, 15) connecté en pivotement à chaque côté de ladite partie centrale (20) et adapté à s'étendre depuis ledit côté, iii) des tuyaux et des buses pour un liquide de pulvérisation, iv) des moyens formant tuyau à air allongé ayant des sorties agencées le long de sa face inférieure, et v) des moyens pour générer et alimenter de l'air audit tuyau à air,
**caractérisée en ce que** le tuyau à air allongé inclut un premier tuyau à air flexible allongé (5) qui s'étend depuis la zone de la partie centrale (20) à l'extrémité opposée (12) de l'un desdits tronçons de flèche (10), et qui est séparé d'un second tuyau à air flexible allongé (5') s'étendant le long de l'autre tronçon de flèche (15), et **en ce que** chaque tronçon de flèche (10, 15) porte un unique ventilateur d'air (25, 25') pour assurer des conditions de flux désirées dans le tuyau à air (5, 5') associé à ce tronçon de flèche (10, 15).

2. Construction en flèche selon la revendication 1, **caractérisée en ce que** les tronçons de flèche (10, 15) comprennent des sous-tronçons connectés par des joints (13, 13'), lesdits tronçons de flèche étant rétractables.

3. Construction en flèche selon l'une quelconque des revendications précédentes, **caractérisée en ce que** le ventilateur d'air (25) est agencé au voisinage de la partie centrale (20) de la construction en flèche (1).

4. Construction en flèche selon l'une quelconque des revendications précédentes, **caractérisée en ce que** le tuyau à air (5) va en se rétrécissant vers son extrémité éloignée du ventilateur d'air (25) qui lui fournit de l'air.

5. Construction en flèche selon la revendication précédente, **caractérisée en ce que** le tuyau à air (5) inclut deux sous-tronçons qui vont en se rétrécissant vers une extrémité respective (12) du tuyau à air (5).
